# EUROPEAN PATENT SPECIFICATION

(11) **EP 0 864 257 B1**
(45) Date of publication and mention of the grant of the patent: **16.06.2004**
(21) Application number: 98103940.7
(22) Date of filing: 05.03.1998
(51) Int. Cl.: A23L 1/00, C05D 9/02, C05G 5/00, C05G 3/00

(54) **Composition for increasing selenium and decreasing nitrate inside vegetables and use thereof**
Zusammensetzung zur Erhöhung des Selengehalts und zur Reduzierung des Nitratgehaltes in Pflanzen und ihre Verwendung
Composition pour augmenter la teneur en sélénium et pour diminuer la teneur en nitrate des plantes et son utilisation

(30) Priority: 06.03.1997 IT BO970128
(43) Date of publication of application: 16.09.1998
(73) Proprietor: Consorzio delle Buone Idee, Societa Cooperativa a Responsabilita Limitata, 40138 Bologna (IT)
(72) Inventor: Pifferi, Piergiorgio, Bologna (IT); Poggi, Valeria, Castel Del Rio (Bologna) (IT)
(74) Representative: Negrini, Elena

(56) References cited:
- EP-A- 0 334 630
- EP-A- 0 485 225
- DE-A- 3 823 539
- GB-A- 492 596
- GB-A- 2 195 993
- GB-A- 2 220 652
- DATABASE WPI Section Ch, Week 9026 Derwent Publications Ltd., London, GB; Class C04, AN 90-199556 XP002111523 & SU 1 507 762 A (CHEM REAGENTS PURE), 15 September 1989 (1989-09-15)
- DATABASE WPI Section Ch, Week 8921 Derwent Publications Ltd., London, GB; Class A97, AN 89-153884 XP002111522 & JP 01 093487 A (NAKAYAMA KOGYO KK), 12 April 1989 (1989-04-12)

## Description

The present invention concerns the treatment of fruit or vegetables in order to increase the mineral element content and to reduce the nitrate content thereof.

Particularly the invention relates to a composition for increasing selenium and decreasing nitrates and glycoalkaloids inside the vegetable, for instance potato tubers, horticultural products in general and fruit.

It is known that the selenium intake in the human food diet, even if in a small quantity estimated around 120 micrograms a day, is necessary to promote a good health and particularly to reduce the tumoral growth and the cardio-circulatory apparatus diseases. Such intake is particularly effective together with the intake of foods containing vitamin E, vitamin C, betacarotene, or with the intake reduction of cholesterol particularly present in animal fats and eatable of choles liquids.

In fact the selenium, together with other chemical species, such as the above-mentioned ones, and with polyphenols, is effective in reducing the concentration of free radicals, in vitro and in vivo. It is known, from the most recent and accredited biochemical hypotheses, that the free radicals, especially the hydroxide and superoxide radicals, cause tumor and cellular membrane degeneration, with consequent cell aging phenomenons and cardiac diseases, especially coronary.

It is also known that the selenium is distributed in a very heterogeneous and different manner inside different foods: its concentration is high in fish and shellfishes (0,15-1,4 micrograms per gram of food, µg/g), medium in cereals (0,10-0,35 µg/g), lower in cheese and in red meat (0,05-0,13 µg/g), poor in vegetables (0,001-0,020 µg/g), in fruit (0,002-0,018 µg/g) and in fats (0,002-0,010 µg/g). Furthermore considerable selenium loss from the human diet foods is for instance due to the food cooking. This means that the daily selenium requirement in the human daily nourishment is not often reached because of the content in poor fish, meat and not-raw carbohydrates.

The selenium increase in foods has been till now obtained only through the soil application of fertilizers enriched of this chemical element so that firstly the vegetables and then the animals fed with such vegetables can increase the selenium absorption and intake respectively.

The principal disadvantage of such selenium enriched manuring consists in that huge quantities of selenium are necessary in spite of its scarce natural availability since it is inside some rare mineral, such as the clausthalite.

Further disadvantage is that the absorption factor of the soil fertilizer from the vegetable depends on various elements, firstly the atmospheric ones and it is therefore extremely aleatory and not effectively controllable.

Besides, a manuring abuse involves an environmental unbalance and even a pollution due both to the excessive ground enrichment with this element and its excessive presence in the water basins or in the water-bearing. In other words, the gross selenium presence initially indifferently distributed in the ground, causes therefore its distribution not only in the vegetables but in the animals, for instance in the cattle and milk products derived therefrom, and also in fish or directly in drinkable waters, creating an uncontrolled environmental "pollution" due to excessive selenium presence in any human and animal food.

It is opportune to remember that the selenium is considered an essential oligo-element in the diet but it is extremely toxic for animals if taken up at concentrations greater than 5-15 ppm, while at concentrations lower than 3 ppm has notable advantages for animal growth and effectiveness against some diseases.

It is also known that the nitrate and glycoalkaloid presence in the vegetables, for instance in the potatoes, represents an anti-nutritional factor. The use of nitrogen based fertilizers, or better nitrogen compounds as nitric acid salts or esters, namely the nitrates, involves, as inevitably consequence, the absorption and therefore the fixation of part of these nitrates in the so manured vegetable products.

The nitrate and glycoalkaloid presence inside the manured vegetables is very disadvantageous for the vegetable consumers because it involves a greater and greater daily nitrate intake to which the glycoalkaloids are added for the potatoes, elements that are notoriously toxic and harmful for the health.

The document SU 1507762 discloses a composition intended to increase biological activity of the vegetables and containing essentially inorganic salt compounds magnesium sulphate and hydroxy ethylidene de phosphonic acid.

This document does not disclose how to increase selenium content in vegetables for solving the problem of assumption by human bodies.

The document GB-A-2220652 describes the co-administration of copper and selenium in the form of salt to the purpose of alleviate the copper deficiencies in ruminant animal gazing pastures.

The content of this last document is addressed to solve the problem of copper deficiencies of animals or humans and not to solve the problem of increasing the selenium and the decrease of nitrates in vegetables for human diet.

The document GB-A-2195993 describes a substance for treating plants to optimise crop yield and/or to provide animal nutrition via grazing of the treated plants consists of water dispersible granules containing at least one trace element and a binder.

The substance is applied to the plants as a solution or suspension in water for example by spraying, and adheres to the foliage on drying. The binder is selected to maintain the granular form of the dry substance and to provide the adhesion to the foliage following application of the substance, and may be a salt of lignosulphonic acid, molasses, starch or carboxymethylcellulose. All cited documents do not disclose a solution including a component suitable for regulating the selenium absorption by vegetables for controlling the selenium content in the vegetable edible portion.

Particularly in the last document the binder favours the adhesion, and not the absorption according to the present invention, of the trace elements to the foliage.

The main object of the present invention is to propose a chemical composition, including a component suitable for regulating the selenium absorption, able to increase considerably and selectively the selenium in vegetable products and particularly in the horticultural products, like for instance, potatoes, tomatoes, eggplants, carrots, broccoli, fennel, cauliflowers, artichokes, radishes, peppers, onions, garlic, beets, lettuces, succories, chicory, courgettes, and in fruits, like for instance, apples, pears, apricots, cherries, peaches, nectarines, kiwi, plums, grapes and the like.

Another purpose is to propose a solution able to decrease drastically the nitrate percentage in vegetables increasing at the same time the ascorbic acid content.

Ulterior purpose is to propose a chemical composition of simple and economic realization and of easy use.

The composition object of the present invention is constituted by a watery solution of selenium salts, with a selenium content ranging between 0,5 and 200 grams of selenium per cubic meter of solution. Selenium salts are constituted by selenite and selenate salts of: sodium, potassium, calcium, magnesium, barium, copper and ammonium.

The watery solution moreover includes biopolymers having acid functions since they contain OH and COOH groups and which can contain aromatic or alicyclic nucleus, some of which have carboxylic functions. Such biopolymers can include alone or in mixtures the following components: alginates, cellulose ethers, carboxymethylcellulose, carrageenin, agar, xantani, pectic acids, humic acids and/or fulvic acids. These biopolymers are in a concentration variable from 0,001% to 0,20%, and are designed to regulate the composition viscosity with the purpose of obtaining its atomization with drops of suitable viscosity and dimension (diameter). The. biopolymers of the composition allow to gradually regulate the selenium transfer to the vegetable so delaying the intake from this latter.

The watery solution contains optionally organic solvents ranging from 0,005% to 25% of the liquid phase, for facilitating the selenium absorption from the leaf apparatus, fruit, tuber, bulb or other plant portion. Such solvents comprise alone or in their mixtures: dimethylsulfoxide; ethylene, polyethylene, hexylene or butylic glycols, 1-2 propylene glycol, diethylene glycol; ethers of glycols and polyglycols with methyl, ethyl, propyl, and butyl alcohol and with other glycols, up to a molecular weight of 20.000, polyglycols and polyoxyethylene glycols up to a molecular weight of 20.000 each.

The watery solution can further contain surface-active agents for favouring the wettability with the composition of the vegetable aerial part, particularly the leaves, and for reducing the surface interfacial tension between leaf and composition. The surface-active agents, alone or mixture, are of the anionic type, like alkyl-benzene sulfonate, or of the cationic type, like the alkyl ammonium salts, or preferably of the non-ionic type, as TRITON@, for instance TRITON@ X-100 and X-20 (trademarks of the Union Carbide Chemicals and Plastics & CO. Inc.), TWEEN® (trademark of the ICI AMERICAS Inc.), sucresters, polyoxyethylene glycols, polyoxylethylene ethers, alkyl aril ethers, alkyl ethoxy phenols, with weight/volume concentrations ranging between 0,001% and 0,25% of the liquid phase.

The watery solution can also include polyvinyl alcohol as polymer, in a weight/volume composition concentration between 0,01% and 2%.

The water of said watery solution is distillate, deionizate or drinkable water.

The mixture is sprinkled at temperatures ranging between 4°C and 40°C with little drops having a diameter lower than one millimeter, preferably 0,05 mm, possibly only on the hypogeous and epigeous apparatus of the fruit and vegetable plant, particularly on the leaves, for a selenium content ranging from 2 to 200 grams per hectare, with a pH ranging between 5 and 9.

The composition sprinkling on this vegetables is repeated several times during their vegetative cycle.

In a variation of the selenium based composition, the association of salty solutions containing molybdenum ions, as molybdate of ammonium, sodium, potassium, calcium, magnesium, barium and molybdophosphate of ammonium, with selenium solutions alone or added with solvents, humic acids, biopolymers, allows reducing the nitrate and glycoalkaloid content, besides increasing the proteic nitrogen and the ascorbic acid content.

Adding salts containing molybdenum to the selenium salt solutions, with a molybdenum ion concentration ranging between 0,20 and 250 grams of molybdenum per cubic meter per hectare of solution with about 7.0 pH, reduce notably the nitrate and glycoalkaloid concentration and increases the ascorbic acid content in different horticultural products, particularly potatoes and reduces the nitrates inside other vegetables such as for example lettuce, carrots, beets, spinaches, eggplants, broccoli.

Further details will result in the description of some preferred examples of practical realization of the compositions for vegetable treatment according to the present invention, examples that are made only as indicative and not limitative.

### Example 1 (Example not falling within the definition of the invention)

In 99 liters of deionized water, 1 liter of ethylene glycol and 20 g of sodium selenite are dissolved. In such solution, containing about 91,32 g/m3 of selenium, an amount of 0,05% of the TRITON@ X-100 surface-active agent is then added for increasing the leaf "wettability". The square 5 per 5 meters sample plots of potatoes, carrots, tomatoes and eggplants are sprinkled with the so obtained solution at 8°C, 25 days after the leaf apparatus growth, nebulizing about 0,090 solution liters per portion, equal to 82,19 grams of selenium per hectare.

At maturation, the tubers and the berries are picked up and the selenium is analyzed, according to said method, getting a selenium content increase respectively of 9, 12, 14 and 16 times, in comparison with the white test values (without treatment) which are respectively 0,011 mg/kg (potatoes), 0,015 mg/kg (carrots), 0,010 mg/kg (tomatoes) and 0,010 mg/kg (eggplants).

### Example 2

In 100 liters of drinkable water, 0,05% of soluble carboxylmethylcellulose, 0,20% of ethylene glycol monomethylether v/v and 4 grams of magnesium selenate are added, getting a selenium content equal to 19 g/m3 of solution. With such solution 2x2 meters square sample plots, having garlic, onions, fennels, broccoli, cauliflowers, peppers, artichokes, radishes, carrots, eggplants, tomatoes and potatoes, are sprinkled with nebulized volumes of about 0,400 L/10m2 equal to 400 L/ha and 7,6 g/ha of selenium, after 60 days from the leaf development.

The selenium content analysis in the tubers and in the horticultural products shows selenium increases respectively of 9, 7, 4, 8, 5, 6, 6, 8, 7, 8, 9 and 8, in comparison with the untreated products corresponding to the white tests.

### Example 3

In 100 liters of water, under stirring, are added 4g of potassium selenate, 50g of humic acids in colloidal dispersion as biopolymers, 50 g of apple pectins with 70% metoxylation degree, 40g of polioxylethylenglyicol with a molecular weight of 6000 as surface-active agent, so obtaining a solution with a concentration of 14,29 grams of selenium per m3 and rectifying the pH with 8,0 value with a 4% KOH solution. The solution is nebulized at 25°C on 2x2 meters sample plots of garlic, onion, fennel, radishes, carrots, eggplants, tomato and potatoes at a volume of 0,650 liters per 10 m2 with 9,28 g/ha of selenium.

The plants sprinkling has been carried out in correspondence of the incipient flowering of the different vegetable species. Once the horticultural species are picked up, the product selenium content has been analyzed, according to said method, whose values are greater 4-7 times compared with the reference values of the untreated samples, containing respectively 0,040, 0,015, 0,012, 0,018, 0,015, 0,011, 0,010, 0,011 selenium mg per product Kg.

### Example 4 (Example not falling within the definition of the invention)

24 grams of ammonium selenite, with

0,1% of TRITON® X-100, are dissolved in 200 liters of water, for obtaining a selenium concentration of 120 grams per m3 of final solution.

The solution is nebulized on apples and pears plant leaves, prepared 6x6 meter square sample plots, at flowering and with a ratio of 0,9 liters per 10 m2 for a total value of 138,5 grams of selenium per hectare.

The apple and pear selenium content 'is then analyzed. In comparison with the untreated sample, containing 0,008 mg of selenium per kilogram, it has been obtained an increase respectively of 6 times and 8 times in the two selenium based treated composition crops.

### Example 5 (Example not falling within the definition of the invention)

In 100 liters of deionized water, 40 grams of potassium selenate, 0.25% of carboxylmethylcellulose, 0.10% of alkyl ethoxy phenol are dissolved, obtaining a concentration solution of 142,9 grams of selenium per m3 of final solution.

The pH is checked with potassium bicarbonate until a value of 7,5 is reached. The solution is nebulized at 25°C on drupaceous leaves and fruits, like peaches, nectarine, apricots, plums, cherries, after the flowering development, prepared on 4x4 meters sample plots, for a volume of 0,8 liters per 10 m2 and a total value of 92,8 grams of selenium per hectare.

At the fruits harvesting the selenium content is analyzed, according to said method, with an increase of 4, 6, 5, 3 and 7 times respectively for peaches, nectarine, apricots, plums and cherries, in comparison with the untreated samples.

### Example 6

In 100 liters of water, 15 grams of magnesium selenate are dissolved, for a concentration of 75 grams of selenium per m³ of solution. The solution is then added with 0.1% of guar rubber and dipropylenglycol methylether at 0.15%. The solution is nebulized at 40°C on 6x6 meters plots of kiwi plants, at flowering, with volumes of 1 liter per 20 m², for a total value of about 37,5 grams of selenium per hectare.

The analysis of selenium content in the treated fruits has confirmed a selenium increase of 8 times, from 0,007 to 0,056 mg of selenium per kilogram of product.

### Example 7

Two leaf treatments have been made on potato administering 50 grams of selenium per hectare and 150 grams of selenium per hectare and using watery solutions of sodium selenate and selenite having concentrations of 40 and 120 milligrams of selenium per liter respectively for the first and the second level at the first treatment and of 60 and 180 milligrams of selenium per liter respectively for the first and the second level during the second treatment. For each salt and treatment level it is adopted the association with dimethylsulfoxide (DMSO) at 0,25% in the final solution used for the leaf sprinkle or with a commercial compound based on humic acids (for instance FRUIT-STIM® of the Firm Bionatura) in quantity of 1 gram per liter in the final solution used for the leaf sprinkle or with TRITON® X-100 in concentration of 0,02% in the final solution used for the leaf sprinkle. Each composition has been carried on pH 7.

The potatoes treated with sodium selenate and selenite in watery solution with an amount of 50 grams of selenium per hectare have shown a selenium content increase of about 5 times, while those one treated with 150 grams of selenium per hectare have shown a selenium content increase ranging 9 and 12 times.

The addition of solvent DMSO and acids increase the selenium accumulation in the tubers when they are associated to sodium selenate; in the association with sodium selenite the response of the lowest selenium content treatment results notably strengthened, while the response of the greatest selenium content treatment results weakly increased or even reduced.

It seems that the addition of the surface-active agent TRITON®X-100 have not determined a meaningful modification of the crop response.

### Example 8 (Example not falling within the definition of the invention)

In 100 liter of water, 20 grams of sodium selenite and 75 grams of ammonium molybdate are dissolved, for a concentration of 91,32 grams of selenium and 40,5 grams of molybdenum per cubic meter of final solution. To such solution, 0.03% of TRITON® X-100 is then added.

The solution is nebulized on 5x5 meters squares plots of potatoes, carrots, courgettes, spinaches, lettuce, eggplants, broccoli, tomatoes, at vegetable flowering, using of 1 cubic meter per hectare and therefore for a value of 91,32 grams of selenium per hectare and 40,5 grams of molybdenum per hectare.

After the product harvesting the selenium and nitrates concentration has been analyzed and a selenium increase ranging between 7 and 15 times and a nitrates decrease for all the species ranging between 5 and 35% has been noted, in comparison with not treated samples; particularly for the potatoes a 25% nitrate and a 30% glycoalkaloid decrease has been registered.

As advantageously deduced from the above cited examples, the selenium dissolved in the solution used for sprinkling the horticultural products is absorbed by the latter in great proportions. It should be noted therefore that the horticultural product treatment method is extremely selective since almost the whole used solutions act on the plant leaf apparatus or its portions without polluting the land or employing huge selenium quantities.

It is important to notice that the examples have shown the nitrate and/or glycoalkaloid absorption reduction in the vegetables treated with such solutions based on selenium and molybdenum.

Advantageously the composition can be directly sprinkled onto the vegetable product after its harvesting, so obtaining the same results of selenium absorption without having a homogeneous distribution in the treated product.

## Claims

1. Composition for selectively increasing selenium content and decreasing the nitrate percentage in fruit or vegetables for human diet **characterized in that** it includes a watery solution of:
- a selenium salt, selected from selenite and selenate salts of sodium, potassium, calcium, magnesium, barium, copper and ammonium, with a selenium content ranging between 0,5 and 200 grams of selenium per cubic meter of solution;
- biopolymers at weight/volume concentrations ranging from 0,001% to 020%, said biopolymers being designed to determine the viscosity of said composition and to favour the checked and gradual release of said selenium composition in contact with said vegetables.

2. Composition according to claim 1 **characterized in that** it further includes organic solvents in a volumetric proportion varying from 0,005% to 25% and fit to facilitate the absorption of said selenium composition by said vegetable.

3. Composition according to claim 2 **characterized in that** said organic solvents comprise, alone or mixed: dimethylsulfoxide; ethylene, polyethylene, butylic or hexylene glycols, 1-2 propylen glycol; diethylene glycol; ethers of glycols and polyglycols with methyl, ethyl, propyl and butyl alcohol and with other glycols up to a molecular weight of 20.000; polyglycols and polyoxyethylene glycols up to a molecular weight of 20.000 each.

4. Composition according to claim 1 **characterized in that** it further includes surface-active agents at weight/volume concentrations varying from 0,001% to 0,25%, designed to reduce the interfacial tension between the sprinkled vegetable portion and said composition.

5. Composition according to claim 4 **characterized in that** said surface-active agents are of the type: anionic, such as alkyl-benzene sulfonate; cationic, such as alkyl ammonium salts; non-ionic, such as sucresters, polyoxyethylene glycols, polyoxyethylene ethers, alkyl aril ethers, and alkyl ethoxy phenols.

6. Composition according to claim 1 **characterized in that** said biopolymers have acid functions since they contain OH and COOH groups.

7. Composition according to claim 6 **characterized in that** said biopolymers comprise, alone or mixed: alginates, cellulose ethers, carboxymethylcellulose, carrageenin, agar, xanthans, pectic acids, humic acids and fulvic acids.

8. Composition according to claim 1 **characterized in that** it further includes polyvinyl alcohol in weight/volume concentration of said composition ranging between 0,01 % and 2%.

9. Composition according to claim 1 **characterized in that** it further includes:
- organic solvents in a volumetric proportion varying from 0,005% to 25%;
- surface-active agents in concentrations varying from 0,001% to 0,25%.

10. Composition according to claim 1 **characterized in that** the water of said watery solution is distillate, deionizate or drinkable water.

11. Composition according to any one of the preceding claims **characterized in that** it further includes molybdenum salts at a concentration ranging from 0,20 to 250 grams of molybdenum per cubic meter of solution.

12. Composition according to claim 11 **characterized in that** said molybdenum salts are molybdophosphate of ammonium and molybdate of: ammonium, sodium, potassium, calcium, magnesium or barium.

13. Use of the composition according to any one of claims 1 to 12 to sprinkle on fruit or vegetables for increasing the selenium and ascorbic acid content and reducing the nitrate and glycoalkaloid content in said fruit or vegetables

14. Use according to claim 13 in which the sprinkling occurs onto the hypogean and/or epigeous apparatus of the fruit or vegetable.

15. Use according to claim 13 in which said composition is sprinkled onto said fruit or vegetable with a selenium content ranging between 2 and 200 grams per hectare.

16. Use according to claim 13 in which said composition is sprinkled as little drops having a diameter smaller than one millimeter, preferably 0,05 millimeters.

17. Use according to claim 13 in which said composition is sprinkled onto said fruit or vegetables at a temperature ranging from 4°C to 40°C.

18. Use according to claim 13 in which said composition is sprinkled onto said fruit or vegetables at a pH value ranging from 5 to 9.

19. Use according to claim 13 in which said vegetables are horticultural products, particularly potatoes, tomatoes, eggplants, carrots, broccoli, fennel, cauliflowers, artichokes, radishes, peppers, onions, garlic, beets, lettuces, chicory and courgettes.

20. Use according to claim 13 in which said fruit are apples, pears, apricots, cherries, peaches, kiwi, plums and grape.

21. Use according to claim 13 in which said sprinkling is repeated during their vegetative cycle.

22. Use according to claim 13 in which said composition is directly sprinkled onto said fruit or vegetable products after their harvesting

## Patentansprüche

1. Zusammensetzung zum selektiven Erhöhen des Selengehalts und zum Verringern des prozentualen Anteils von Nitraten in Obst oder Gemüse für den menschlichen Verzehr, **dadurch gekennzeichnet, dass** sie eine wässrige Lösung aus:
- einem Selensalz, ausgewählt aus Selenit und Selenatsalzen von Natrium, Kalium, Kalzium, Magnesium, Barium, Kupfer und Ammonium, mit einem Selengehalt im Bereich von 0,5 bis 200 Gramm Selen pro Kubikmeter Lösung;
- Biopolymeren mit Gewicht/Volumen-Konzentrationen im Bereich von 0,001% bis 0,20%, wobei die Biopolymere dazu ausgelegt sind, die Viskosität der Zusammensetzung zu bestimmen und die kontrollierte und allmähliche Freigabe der Selenzusammensetzung in Kontakt mit dem Gemüse zu fördern,
enthält.

2. Zusammensetzung nach Anspruch 1, **dadurch gekennzeichnet, dass** sie ferner organische Lösungsmittel in einem Volumenanteil im Bereich zwischen 0,005% und 25% enthält, welche dazu geeignet sind, die Aufnahme der Selenzusammensetzung durch das Gemüse zu erleichtern.

3. Zusammensetzung nach Anspruch 2, **dadurch gekennzeichnet, dass** die organischen Lösungsmittel, für sich alleine oder gemischt, enthalten: Dimethylsulfoxid; Ethylen, Polyethylen, Butyl- oder Hexylenglykole, 1-2-Propylenglykol; Diethylenglykol; Ether von Glykolen und Polyglykolen mit Methyl-, Ethyl-, Propylund Butylalkohol und mit anderen Glykolen bis zu einem Molekulargewicht von 20.000; Polyglykole und Polyoxyethylenglykole bis zu einem Molekulargewicht von jeweils 20.000.

4. Zusammensetzung nach Anspruch 1, **dadurch gekennzeichnet, dass** sie ferner oberflächenaktive Mittel mit Gewicht/Volumen-Konzentrationen im Bereich von 0,001 % bis 0,25% enthält, die dazu ausgelegt sind, die Oberflächenspannung zwischen dem besprühten Gemüseabschnitt und der Zusammensetzung zu verringern.

5. Zusammensetzung nach Anspruch 4, **dadurch gekennzeichnet, dass** die oberflächenaktiven Mittel von folgenden Typen sind: anionisch, wie z.B. Alkylbenzensulfonat; kationisch, wie z.B. Alkylammoniumsalze; nicht ionisch, wie z.B. Sukrester, Polyoxyethylenglykole, Polyoxyethylenester, Alkylarilester und Alkylethoxiphenole.

6. Zusammensetzung nach Anspruch 1, **dadurch gekennzeichnet, dass** die Biopolymere Säurefunktionen aufweisen, da sie OH- und COOH-Gruppen enthalten.

7. Zusammensetzung nach Anspruch 6, **dadurch gekennzeichnet, dass** die Biopolymere, für sich alleine oder gemischt, enthalten: Alginate, Zelluloseether, Carboxymethylzellulose, Carrageenan, Agar, Xanthans, Pektinsäuren, Huminsäuren und Fulvosäuren.

8. Zusammensetzung nach Anspruch 1, **dadurch gekennzeichnet, dass** sie ferner Polyvinylalkohol mit einer Gewicht/Volumen-Konzentration der Zusammensetzung im Bereich zwischen 0,01% und 2% enthält.

9. Zusammensetzung nach Anspruch 1, **dadurch gekennzeichnet, dass** sie ferner enthält:
- organische Lösungsmittel in einem Volumenanteil zwischen 0,005% und 25%;
- oberflächenaktive Mittel in Konzentrationen zwischen 0,001% und 0,25%.

10. Zusammensetzung nach Anspruch 1, **dadurch gekennzeichnet, dass** das Wasser der wässrigen Lösung destilliertes, deionisiertes oder trinkbares Wasser ist.

11. Zusammensetzung nach einem der vorhergehenden Ansprüche, **dadurch gekennzeichnet, dass** sie ferner Molybdensalze in einer Konzentration im Bereich von 0,20 bis 250 Gramm von Molybden pro Kubikmeter Lösung enthält.

12. Zusammensetzung nach Anspruch 11, **dadurch gekennzeichnet, dass** die Molybdensalze Molybdatophosphate von Amonium und Molybdat von Ammonium, Natrium, Kalium, Kalzium, Magnesium oder Barium sind.

13. Verwendung der Zusammensetzung nach einem der Ansprüche 1 bis 12 zum Besprühen von Obst und Gemüse zum Erhöhen des in dem Obst oder Gemüse enthaltenen Selen- und Ascorbinsäuregehalts und zum Verringern des in dem Obst oder Gemüse enthaltenen Nitrat- und Glykoalkaloidgehalts.

14. Verwendung nach Anspruch 13, bei welcher das Besprühen auf den unterirdisch und/oder oberirdisch wachsenden Abschnitt des Obstes oder Gemüses erfolgt.

15. Verwendung nach Anspruch 13, bei welchem die Zusammensetzung auf das Obst oder Gemüse mit einem Selengehalt im Bereich zwischen 2 und 200 Gramm pro Hektar gesprüht wird.

16. Verwendung nach Anspruch 13, bei welchem die Zusammensetzung als kleine Tropfen mit einem Durchmesser kleiner als einem Millimeter, vorzugsweise 0,05 Millimeter, gesprüht wird.

17. Verwendung nach Anspruch 13, bei welcher die Zusammensetzung auf das Obst oder Gemüse bei einer Temperatur im Bereich zwischen 4°C und 40°C gesprüht wird.

18. Verwendung nach Anspruch 13, bei welcher die Zusammensetzung auf das Obst oder Gemüse bei einem pH-Wert im Bereich zwischen 5 und 9 gesprüht wird.

19. Verwendung nach Anspruch 13, bei welcher das Gemüse gartenbauliche Produkte sind, insbesondere Kartoffeln, Tomaten, Auberginen, Karotten, Brokkoli, Fenchel, Blumenkohl, Artischocken, Rettiche, Paprika, Zwiebeln, Knoblauch, Rüben, Salate, Chicoree und Zucchini sind.

20. Verwendung nach Anspruch 13, bei welchem das Obst Äpfel, Birnen, Aprikosen, Kirschen, Pfirsiche, Kiwis, Pflaumen und Weintrauben sind.

21. Verwendung nach Anspruch 13, bei welcher das Besprühen während ihres Wachstumszyklus wiederholt wird.

22. Verwendung nach Anspruch 13, bei welcher die Zusammensetzung nach der Ernte direkt auf das Obst oder Gemüse gesprüht wird.

## Revendications

1. Composition pour augmenter sélectivement la teneur en sélénium et pour diminuer le pourcentage de nitrates dans des fruits ou des plantes pour un régime humain, **caractérisée en ce qu'**elle comprend une solution aqueuse de :
- sel de sélénium, choisi parmi du sélénite et du séléniate, des sels de sodium, de potassium, de calcium, de magnésium, de baryum, de cuivre et d'ammonium, avec une teneur en sélénium comprise entre 0,5 et 200 grammes de sélénium par mètre cube de solution ;
- biopolymères dont les concentrations poids/volume sont comprises entre 0,001 % et 0,20 %, lesdits biopolymères étant conçus pour déterminer la viscosité de ladite composition et pour privilégier la libération contrôlée et progressive de ladite composition de sélénium en contact avec lesdites plantes.

2. Composition selon la revendication 1, **caractérisée en ce qu'**elle comprend en outre des solvants organiques dans une proportion volumétrique variant entre 0,005 % et 25 % et adaptés pour faciliter l'absorption de ladite composition de sélénium par lesdites plantes.

3. Composition selon la revendication 2, **caractérisée en ce que** lesdits solvants organiques comprennent, seuls ou mélangés : du diméthylsulfoxide ; de l'éthylène, du polyéthylène, des glycols butyliques ou des héxylèneglycols, du 1-2 propylèneglycol ; du diéthylène glycol ; des éthers de glycols et de polyglvcols avec de l'alcool méthylique, éthylique, propylique et butylique et avec d'autres glycols dont le poids moléculaire peut atteindre 20 000 ; des polyglycols et des glycols polyoxyéthylènes dont le poids moléculaire peut atteindre 20 000 pour chacun.

4. Composition selon la revendication 1, **caractérisée en ce qu'**elle comprend en outre des agents de surface dont les concentrations poids/volume varient entre 0,001 % et 0,25 %, conçus pour réduire la tension interfaciale entre la partie de la plante aspergée et ladite composition.

5. Composition selon la revendication 4, **caractérisée en ce que** lesdits agents de surface sont de type : anionique, tel que de l'alkylbenzènesulfonate ; cationique, tel que des sels d'alkyl ammonium ; non-ionique, tel que des sucroesters, des glycols polyoxyéthylèniques, des éthers polyoxyéthylèniques, des éthers d'alkylaryle et des phénols d'alkyl éthoxy.

6. Composition selon la revendication 1, **caractérisée en ce que** lesdits biopolymères ont des fonctions acides puisqu'ils contiennent des groupes OH et COOH.

7. Composition selon la revendication 6, **caractérisée en ce que** lesdits biopolymères comprennent, seuls ou mélangés : des alginates, des éthers de cellulose, de la carboxyméthylcellulose, de la carraghénine, de l'agar, des xanthanes, des acides pectiques, des acides humiques et des acides fulviques.

8. Composition selon la revendication 1, **caractérisée en ce qu'**elle comprend en outre un alcool polyvinylique dont la concentration poids/volume dans ladite composition est comprise entre 0,01 % et 2 %.

9. Composition selon la revendication 1, **caractérisée en ce qu'**elle comprend en outre :
- des solvants organiques dans une proportion volumétrique variant entre 0,005 % et 25 % ;
- des agents de surface dont les concentrations varient entre 0,001 % et 0,25 %.

10. Composition selon la revendication 1, **caractérisée en ce que** l'eau de ladite solution aqueuse est de l'eau distillée, déionisée ou potable.

11. Composition selon l'une des revendications précédentes, **caractérisée en ce qu'**elle comprend en outre des sels de molybdène dont la concentration est comprise entre 0,20 et 250 grammes de molybdène par mètre cube de solution.

12. Composition selon la revendication 11, **caractérisée en ce que** lesdits sels de molybdène sont un molybdophosphate d'ammonium et un molybdate : d'ammonium, de sodium, de potassium, de calcium, de magnésium ou de baryum.

13. Utilisation de la composition selon l'une quelconque des revendications 1 à 12, pour asperger des fruits ou des plantes afin d'augmenter la teneur en sélénium et en acide ascorbique et afin de réduire la teneur en nitrates et en glycoalkaloïdes dans lesdits fruits ou plantes.

14. Utilisation selon la revendication 13, dans laquelle l'aspersion se fait sur l'appareil hypogé et/ou épigé du fruit ou de la plante.

15. Utilisation selon la revendication 13, dans laquelle ladite composition est pulvérisée sur ledit fruit ou ladite plante avec une teneur en sélénium comprise entre 2 et 200 grammes par hectare.

16. Utilisation selon la revendication 13, dans laquelle ladite composition est pulvérisée sous forme de gouttelettes ayant un diamètre inférieur à un millimètre, de préférence 0,05 millimètres.

17. Utilisation selon la revendication 13, dans laquelle ladite composition est pulvérisée sur ledit fruit ou ladite plante à une température comprise entre 4°C et 40°C.

18. Utilisation selon la revendication 13, dans laquelle ladite composition est pulvérisée sur ledit fruit ou ladite plante à un pH compris entre 5 et 9.

19. Utilisation selon la revendication 13, dans laquelle lesdites plantes sont des produits horticoles, en particulier des pommes de terre, des tomates, des aubergines, des carottes, des brocolis, du fenouil, des choux-fleurs, des artichauts, des radis, des poivrons, des oignons, de l'ail, des betteraves, des laitues, de la chicorée et des courgettes.

20. Utilisation selon la revendication 13, dans laquelle lesdits fruits sont des pommes, des poires, des abricots, des cerises, des pêches, des kiwis, des prunes et du raisin.

21. Utilisation selon la revendication 13, dans laquelle ladite aspersion est répétée durant leur cycle végétatif.

22. Utilisation selon la revendication 13, dans laquelle ladite composition est directement pulvérisée sur lesdits fruits ou produits végétaux après leur récolte.
